# EUROPEAN PATENT APPLICATION

(11) **EP 4 613 369 A1**
(43) Date of publication of application: **10.09.2025**
(21) Application number: 24161477.5
(22) Date of filing: 05.03.2024
(51) Int. Cl.: B01J 8/02, B01J 19/00, B01J 19/24, B01J 4/00

(54) **FIXED-BED CATALYTIC REACTOR**

(71) Applicant: Kanadevia Inova AG, 8005 Zürich (CH)
(72) Inventor: SENN, Patrick, 8005 Zürich (CH); HÜTTER, Christoph, 8005 Zurich (CH); ZIEGLER, Philipp, 8005 Zürich (CH); MALISKE, Stefan, 8005 Zürich (CH); KELLER, Lukas, 8005 Zürich (CH)
(74) Representative: Schaad, Balass, Menzl & Partner AG

(57) **Abstract**

The present application relates to a fixed-bed reactor 10 including a reactor shell 12 and a plate package 14 mounted inside the reactor shell 12 on a mounting 60, whereby the lower end 46 of the plate package rests on the mounting 60;
the reactor shell 12 having an upper shell section 22 and a lower shell section 24, each shell section including a convexly shaped endplate 20, 21 at one end and a flange unit 26, 27 with a flange face at another end, the two shell sections 22, 24 being sealingly connected by clamping the two flange faces against one another,
the reactor further comprising a sealing plate 64 extending essentially vertically to the longitudinal direction and being held between the flange faces of the two flange units 26, 27, the sealing plate 64 providing a gas-tight separation of an upper inlet gas plenum 68 facing a top end 16 of the reactor from a lower outlet gas plenum 70 facing a bottom end 70 of the reactor.

## Description

The present application relates to a fixed-bed catalytic reactor for carrying out catalytic gas phase reactions, particularly methanation reactions.

Methanation is an exothermic reaction in which carbon oxides - usually carbon monoxide (CO) and carbon dioxide (CO₂) are converted into methane (CH₄).

The basic chemical equations for methanation are:

CO+3H₂=CH₄+H₂O+heat (1)

CO₂+4H₂=CH₄+2H₂O+heat (2) .

In this reaction, carbon monoxide (CO) or carbon dioxide (CO₂) reacts with hydrogen gas (H₂) to produce methane (CH₄) and water (H₂O). The methanation reaction is typically performed at elevated temperatures and pressures, and a catalyst is often used to enhance the efficiency of the process.

The methanation reaction is commonly employed in applications where the conversion of carbon oxides into methane is desirable. For instance, methanation is a key step in the production of synthetic natural gas (SNG) or substitute natural gas, which can be used as a clean-burning fuel. It is also important in the context of carbon capture and utilization, where carbon dioxide is captured from industrial processes and converted into methane for storage or use.

Many of the earlier industrial methanation plants and processes were developed for coal gasification. In a majority of these processes, the methanation is carried out at elevated pressure usually between 20 bar and 80 bar and at temperatures between 350°C and 500°C. The selected methanation temperatures are deliberately high in order to generate high-pressure steam with the corresponding reaction heat for conjoint generation of electricity. Methanation reactors of this type are challenging from a design perspective and are cost-intensive.

WO 2009123151A1 discloses that plate-type reactors can be used for an exothermic or endothermic reaction using a catalyst. In a fixed-bed plate-type reactor, the catalyst is typically supported on plates or other fixed structures within the reactor, forming a fixed bed. The feed gases (carbon monoxide, hydrogen, etc.) flow through the fixed bed, and the reaction takes place on the catalyst surface. The plates provide mechanical support for the catalyst and help distribute the reactants evenly.

It is known from e.g. WO2020069974A1 that fixed-bed plate-type reactors can be used in the methanation process. However, there are several drawbacks to the reactor design, in particular when aiming to scale up the methanation to industrial-scale:
In WO2020069974A1 the plate package is designed as a hanging insert that hangs from a bearing ring fastened to the inside wall of the reactor shell. The plate package thus extends from the bearing ring downwards, i.e. in the direction of gravity towards the bottom of the reactor. The bearing ring not only holds the plate package but also functions as sealing plate separating an inlet gas plenum at the top of the reactor from an outlet gas plenum at the bottom of the reactor. Due to this sealing functionality, the size of the reactor is limited as the bearing ring is not suitable for holding larger weight of bigger plate packages.

In larger reactors, the pressure drop across the reactor bed was found to become more significant. Pressure drop affects the overall pressure within the reactor and can lead to uneven reactant distribution, reducing the efficiency of the catalytic process.

Another issue is the limitation in heat transfer within the fixed-bed. Since methanation is an exothermic reaction that generates heat, limitations in the heat transfer can lead to hotspots within the reactor. In particular if there is a large temperature difference between the plate package inside the reactor and the reactor shell, thermal stress occurs at any contact point of the two. In case of the reactor disclosed in WO2020069974A1, heat transfer occurs from the hot plate package to the holding plate connected to the reactor shell. As such, thermal linear expansion of the holding plate works against the reactor shell, which can cause gas leakage.

In view of the above challenges, there was a need for a new reactor design that makes fixed-bed reactors suitable for methanation reactions, in particular for industrial scale.

This problem is solved by the fixed-bed reactor according to Claim 1. Preferred embodiments are subject of the dependent claims.

The inventive reactor includes a reactor shell extending in an axial direction from a top end of the reactor towards a bottom end of the reactor. Said reactor shell has an upper shell section and a lower shell section, each shell section including a convexly shaped endplate at one end and a flange unit with a flange face at another end, the two shell sections being sealingly connected by clamping the two flange faces against one another. The reactor further includes:
a feed gas inlet connected to a feed gas supply,
a product gas outlet,
a water inlet in the area of the bottom end of the reactor and a water/steam outlet (allows exit of water and/or steam) in the area of the top end of the reactor,
a plate package positioned inside the reactor shell and extending in the axial direction, the plate package comprising at least two plates with a catalyst filled in between to thereby form a fixed bed and further comprising a water inlet and a product gas outlet at a lower end, and a water/steam outlet and a feed gas inlet at an upper end. Said plate package is mounted on a mounting connected the reactor shell, whereby the lower end of the plate package rests on the mounting.

In accordance with the present invention the reactor further comprises a sealing plate extending essentially perpendicularly to the axial direction and being held between the flange faces of the two flange units. The sealing plate provides a gas-tight separation of an upper inlet gas plenum facing the top end of the reactor from a lower outlet gas plenum facing the bottom end of the reactor.

In the following, the components of the inventive reactor and preferred features will be described in more detail.

The reactor shell is the outer - often cylindrical or rectangular - structure that encloses the internal components of the reactor. It provides containment for the reactor system and is constructed from materials suitable for the operating conditions, such as stainless steel for high-temperature or in the presence of reactive gases like hydrogen.

The reactor shell forms a pressure chamber in which the plate package and a reaction medium are located. It is composed of two shell sections, namely an upper shell section and a lower shell section. Each shell section includes an endplate at one end and a flange unit with a flange face at another end. The two endplates, which are a top endplate and a bottom endplate, are convexly shaped. A different way to describe the shape of the endplates is to say that they are dome-shaped. This convex design allows withstanding higher pressure.

The plate package is positioned within the reactor shell and comprises two or more plates that are preferably cooled and between which the catalyst is filled to form a fixed bed. The fixed bed constitutes the core of the reactor and consists of a stationary catalyst or packing material through which the feed gas flows. The term feed gas refers to the reactant gas that is intended to flow through the plate package, specifically through the fixed bed, to be converted with the aid of the catalyst into the product gas. The fixed bed can be composed of various materials depending on the specific reaction requirements, such as catalyst particles, structured catalysts, or inert packing.

The plates inside the plate package are preferably dimpled plates. This ensures even distribution of feedstock or reactants across the bed's cross-section. This uniform distribution helps prevent channelling or preferential flow paths, promoting efficient contact between the reactants and the catalyst or packing material. The plate package also provides structural support for the catalyst or packing material within the fixed-bed reactor. It helps maintain the integrity of the bed, preventing the catalyst particles or packing from settling or moving excessively, which could lead to poor performance or uneven flow distribution.

The plates are generally cooled with the aid of a cooling fluid, which is usually water. Said cooling fluid is introduced through the water inlet at the lower end of the plate package and flows upwards, i.e. towards the top end of the reactor through the plate package before it exits the plate package in form of a water-steam-mixture through the water/steam outlet at the upper end of the plate package. With this setup, the cooling fluid can flow with a natural draft induced by evaporation in the hotspot of the chemical reaction taking place within the plate package.

The plate package preferably includes a bottom plate (i.e. a plate facing the bottom end of the reactor) that is perforated, meaning that it comprises holes that are small enough to retain the catalyst within the plate package, but big enough to allow gas flow through the plate package in the axial direction. In one example, the bottom plate of the plate packaging is in the form of a sieve with openings and the catalyst comprises pellets, the diameter of the openings of the sieve being less than half the size of the diameter of the pellets.

In line with the present invention, the upper and lower shell sections of the reactor shell are attached to one another using a flange connection. The sealing plate is positioned between the two flange faces, i.e. between opposing - generally flat - surfaces, of the flange units.

The feed gas inlet allows introduction of a feed gas into the reactor. The product gas outlet allows the removal of a product gas from the reactor.

In line with the present invention, a sealing plate sealingly separates an inlet gas plenum from an outlet gas plenum.

The inlet gas plenum is the space at the top or upper half of the fixed-bed reactor where the feed gases are introduced through inlet ports, such as the reactor's feed gas inlet. The inlet gas plenum is responsible for distributing the incoming gases evenly across the entire cross-sectional area of the reactor's fixed bed. It may contain distribution systems, such as perforated plates, distributors, or specially designed grids, to ensure uniform gas flow through the catalyst bed.

The outlet gas plenum is the space located at the bottom or lower half of the fixed-bed reactor, where the products or effluents resulting from the reaction are collected before exiting the reactor through outlet ports, such as the reactor's product gas outlet. Similar to the inlet gas plenum, the outlet gas plenum may include diffusers or other elements to promote even flow distribution and prevent preferential pathways for gas exit.

In accordance with the present invention, the reactor further comprises a mounting inside the reactor shell, on which the plate package is mounted, preferably in a non-welded manner. This design allows for thermal expansion of the plates and also avoids thermal stress even if there is a considerable temperature difference between the reactor shell and the plate package. In addition, it allows removal of the plate package from the reactor for maintenance and catalyst filling or exchange. This is a great benefit since it is known that over time, catalysts can deactivate due to various reasons such as fouling, coking, or sintering. Deactivation can reduce the effectiveness of the catalyst and therefore necessitates periodic regeneration or replacement. In the known fixed-bed plate reactors, catalyst exchange is usually complex and requires prolonged shutdowns that disrupt continuous operation and affect productivity. The reactor design of the present invention provides a solution to this problem.

Another key benefit of the present invention is that the sealing plate and the mounting are two separate components. Thereby, the functions of plate package mounting and gas separation are separated and can be designed to best fulfil their particular requirements with respect to stability and gas tightness. The sealing plate and thus also the flange connection is preferably located above the mounting, meaning closer to the top end of the reactor.

The inventive reactor may generally also include instrumentation and control systems, which include sensors, gauges, and control mechanisms (temperature, pressure sensors, flow meters, etc.) to monitor and regulate process conditions within the reactor, ensuring safe and optimal operation.

The reactor may further include support structures, baffle plates, or additional distribution elements, to optimize flow distribution, enhance mixing, or support the catalyst bed. An outlet diffuser may also be installed to facilitate the uniform exit of reaction products or effluents from the reactor.

Additionally, the reactor generally includes a heat transfer system, which preferably includes heat transfer surfaces, such as coils or jackets, within the reactor to control and manage the temperature during the reaction. If an exothermic reaction, such as the methanation reaction, takes place in the reactor space, a considerable part of the reaction heat of has to be removed. The heat transfer system preferably involves feeding a temperature control fluid, such as water, through pipes or hoses, preferably in a counter-current fashion to the reaction medium, through the plate package.

In a preferred embodiment the sealing plate is attached, preferably welded, to the outer circumference of the plate package and extends therefrom in the radial direction. To ensure a gas-tight separation of the inlet gas plenum from the outlet gas plenum, the sealing plate is preferably welded to the plate package at one end and extends in the radial direction such that the outer edge(s) of the sealing plate is either placed between the two flange faces or protrudes out of the two flange faces.

Since the sealing plate has no bearing function, it can be designed thinner, such that it has some degree of flexibility to allow deformation under thermal expansion.

It is further preferred that the sealing plate comprises a thermal expansion loop for thermal compensation. A thermal expansion loop as used in the context of this application refers to a design or arrangement that accommodates the thermal expansion and contraction of materials due to changes in temperature. Thermal expansion can lead to stresses and distortions in structures if not properly accounted for. A thermal expansion loop is designed to allow for these dimensional changes without causing damage or deformation.

As mentioned earlier, the upper and lower shell sections can be attached to one another using the flange connection. Preferably, the two flange units are detachably attached to one another, allowing opening of the reactor shell. Thus, the flange connection is not permanent and can be undone, such that the shell sections can be disconnected and the reactor shell can be opened for maintenance or catalyst handling.

In a preferred embodiment each of the upper and lower shell section is integrally formed, preferably in one piece, with its pertaining endplate and its pertaining flange unit. In this embodiment, the reactor preferably comprises a single flange connection connecting the two integrally formed units which form the reactor. This facilitates transport and assembly of the reactor parts, while allowing easy opening the reactor for easier handling and maintenance of the catalyst.

While the mounting is preferably welded to the inner wall of the reactor shell, it is preferred that the plate package is mounted on the mounting in a non-welded manner. Thus, preferably there is only a welded connection between the mounting and the reactor shell, but not between the plate package and the reactor. This enables easy removal of the plate package from the reactor shell, e.g. for catalyst exchange. If the sealing plate is attached to the plate package as described earlier, the plate package is preferably removable from the reactor shell together with the sealing plate. For removing the plate package, the reactor is preferably opened by detaching the upper shell section from the lower shell section at the flange, as described above.

Preferably, the plate package is only indirectly in contact with the reactor shell via the mounting. Thus, - apart from the water connections - there is preferably no other connection between the plate package and the reactor shell except for the indirect connection via the mounting and the plate package is held at a distance to the inner wall of the reactor shell. This greatly eliminates areas of contact between the hot plate package and the usually colder reactor shell, where thermal stress can build up. While in known reactors, the reactor shell is often heated to reduce the temperature difference between the reactor shell and the plate package, the reactor design of the present invention does no longer require such heating.

To further reduce thermal stress due to temperature differences between the reactor shell and the plate package and in case of thermal expansion of the plate package, it is preferred that the plate package rests on the mounting via a foot element connected to the lower end of the plate package. In this embodiment the plate package is not directly in contact with the mounting connected to the reactor shell, but only via the foot element placed on mounting. This also allows better adaptability of the plate package to different reactor sizes - meaning that a one-size plate package can fit into reactors of different sizes by simply enlarging or reducing the size of the foot element.

In a preferred embodiment the plate package comprises one or more spacer element extending from the outer surface of the plate package, preferably at the upper end. These spacer elements generally extend in the radial direction from the plate package towards the inner wall of the reactor shell, however, without coming into contact with the latter. These spacer elements facilitate installing the plate package within the reactor shell as they can help centering the plate package when being inserted from above into the bottom half of the reactor shell, e.g. by being lowered down with the aid of a crane.

In a further preferred embodiment, a connecting line between the water inlet of the reactor and the water inlet of the plate package and/or a connecting line between the water water/steam outlet of the plate package and the water/steam outlet of the reactor includes multiple flexible water hoses. Flexible water hoses allow for free thermal extension. In addition, it facilitates exchange of the plate package as the flexible hoses give more spatial freedom with respect to the location of the water/steam inlets and outlets. Preferably, the water hoses are made of stainless steel. This ensures that they can withstand the high pressures and/or reactive media environment.

To facilitate removal of the plate package from the reactor, it is preferred that internal flanges are used to connect the water hoses of the upper connecting line to the water/steam outlet of the reactor and/or to connect the water hoses of the lower connecting line to the water inlet of the reactor. Most preferably, all connections between water hoses and the reactor shell are secured with the aid of internal flanges.

As regards the local arrangement of the parts of the reactor it is preferred that the sealing plate and the feed gas inlet are located in the lower half of the reactor shell. Notably, the lower half of the reactor shell is not necessarily the same as the lower shell section: The border between the upper and lower half of the reactor shell is in the middle of said shell. The border between the upper and lower shell section is defined by the location of the flange assembly and thus the sealing plate, yet said flange assembly does not need to be located in the middle of the reactor shell. Since the feed gas inlet is generally arranged above the sealing plate, i.e. closer to the top end of the reactor than the sealing plate, the feed gas inlet is generally located in the upper shell section but it is preferably also located in the lower half of the reactor shell. This forces the feed gas introduced through the feed gas inlet to flow upwards, i.e. towards the top end of the reactor. While passing along or through (a separate channel within) the hot plate package, the feed gas can thereby be pre-heated before entering the plate package at the upper end and flow downwards, i.e. towards the bottom end of the reactor, through the fixed bed, before exiting the reactor through the product gas outlet. A further advantage of having the feed gas inlet located in the lower half of the reactor shell of the reactor is that flushing the reactor with gas, e.g. H₂ or N₂ in case of a re-start after a shut-down, is facilitated.

For preheating the feed gas during its flow from the feed gas inlet of the reactor to the feed gas inlet of the plate package it is preferred that a feed gas space is provided between an outer wall of the plate package and an inner wall of the reactor shell, said feed gas space being delimited in the downward direction by the sealing plate and extending along at least half of the length of the plate package. This will ensure that the feed gas flows along the hot plate package for a certain time that enables improved pre-heating of the feed gas. The feed gas is preferably first pre-heated in an economizer prior to entering the reactor.

The product gas outlet of the reactor is preferably located in the lower half of the reactor shell, preferably in the area of the interface of lower shell section and its pertaining (bottom) endplate. In this embodiment, there is only a short distance between the product gas outlet of the plate package and the product gas outlet of the reactor. It was found that cooling of the product gas inside the reactor can lead to undesired condensation of steam. Therefore, it is preferred to route the hot product gas directly out of the reactor and use the heat e.g. in a downstream economizer.

Preferably, as seen in the axial direction, the feed gas inlet of the reactor is located above the sealing plate and wherein the product gas outlet is located below the sealing plate. This enables the gas flow route described above, allowing pre-heating of the feed gas prior to entering the plate package, and allowing direct exit of the product gas from the reactor after exiting the plate package.

In order to allow free access to the bottom end of the reactor, the reactor shell is preferably mounted on a cylindrical socket element, in a way that the bottom end of the reactor extends into the socket element and, at the point of contact, the cross-sectional shape of the reactor shell aligns with the cross-sectional shape of the socket element. There may be a welded connection between the reactor shell and the socket element to provide additional stability. The socket element stands on the ground and may be secured by bolts. It preferably comprises a lateral opening that allows access to the bottom end of the reactor. Preferably, the socket element is made of the same material as the reactor shell. Thanks to the socket element, the reactor can be installed without requiring an additional steel structure.

In the following, the invention will be described by way of example with reference to the accompanying drawings. In the drawings,
FIG. 1 shows a perspective view of a fixed-bed catalytic reactor according to the invention,
FIG. 2 shows a longitudinal cross-sectional view along line A-A of the reactor shown in FIG. 1, and
FIG. 3 shows a longitudinal cross-sectional view along line B-B of the reactor shown in FIG. 2.

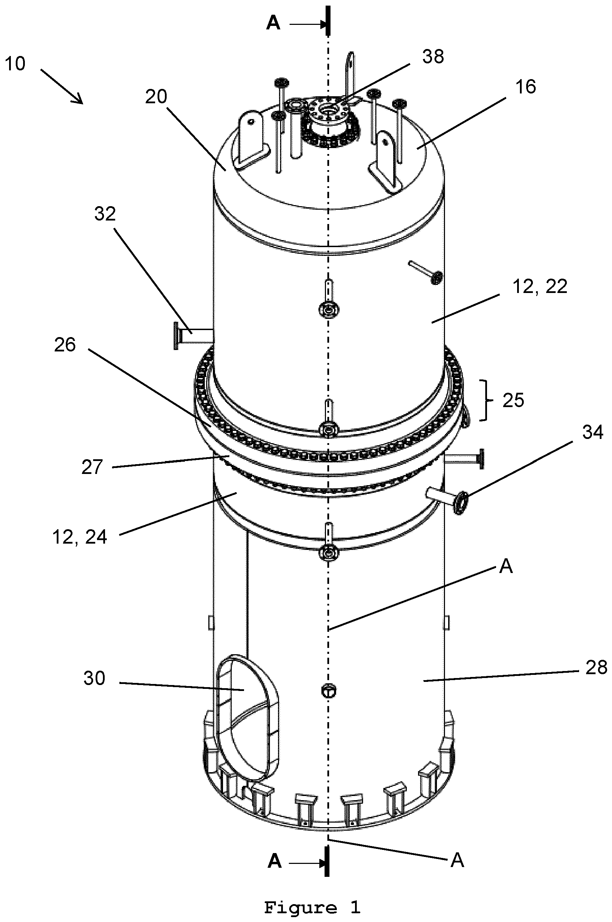

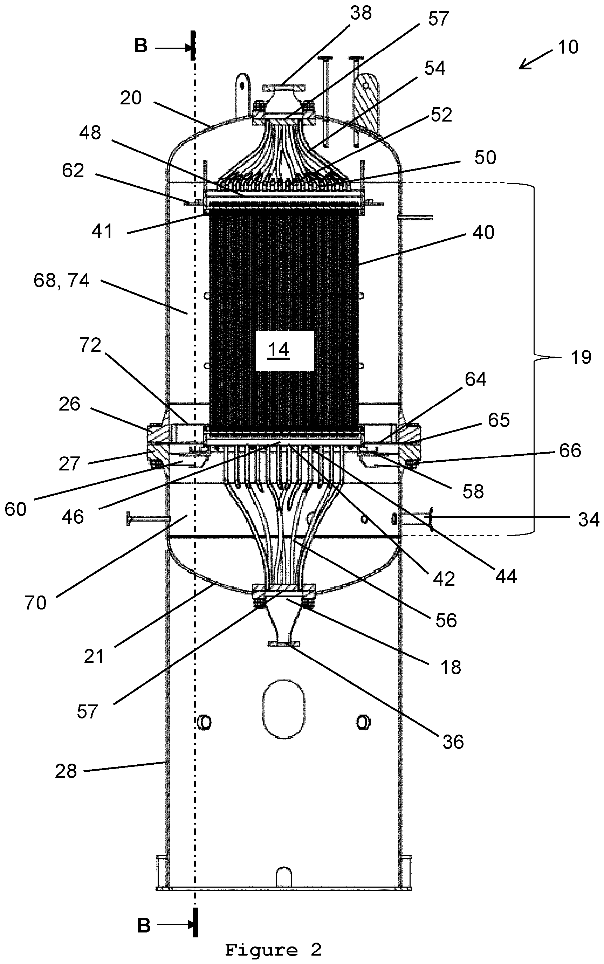

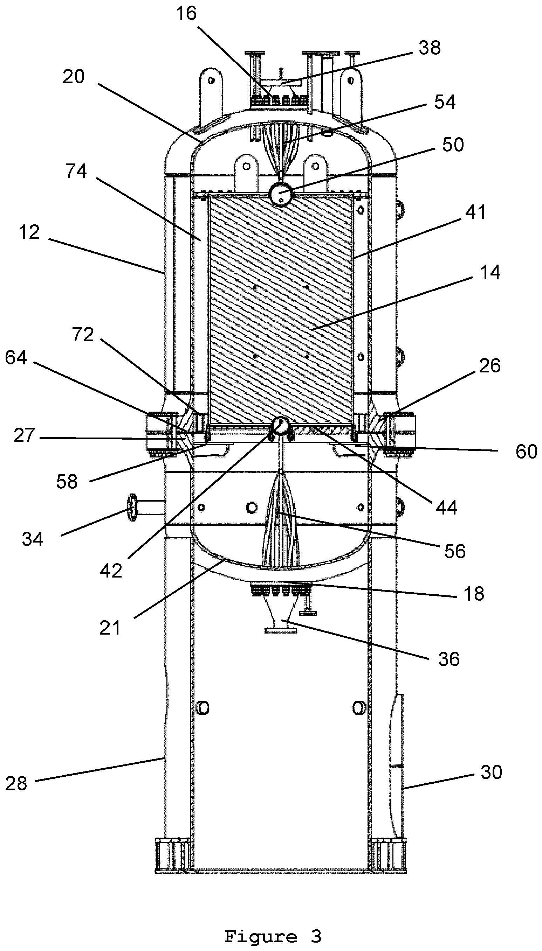

FIG. 1 shows a perspective view of a reactor 10 according to a first embodiment of the present invention. The reactor 10 is intended for the catalytic methanation of a gas mixture having hydrogen and carbon dioxide. It includes a reactor shell 12 forming a pressure chamber and a plate package 14 mounted therein (see Figs. 2 and 3). The longitudinal axis of the shell defines an axial direction A and the reactor 10 extends in said axial direction A from a top end 16 towards a bottom end 18.

The reactor shell 12 has a cylindrical main section 19 and two dome-shaped endplates 20, 21. The two endplates 20, 21 are welded and thus permanently fixed to the main shell section 19 of the reactor shell.

The reactor shell 12 is divided into two parts, namely an upper shell section 22 and a lower shell section 24, each shell section including one of the two convexly shaped endplates 20, 21 at one end and a flange unit 26, 27 with a flange face at another end (also see Figs 2 and 3). The two shell sections 22, 24 are each integrally formed in one piece with its pertaining endplate 20, 21 and its pertaining flange unit 26, 27, and they are sealingly connected by clamping the two flange faces against one another. In other words, the two shell sections 22, 24 are each formed as a single unit and are connected via a flange connection 25 in a manner that ensures a tight seal, preventing the passage of gas or liquid. Notably, the two flange units 26, 27 are detachably attached to one another, allowing opening of the reactor shell 12. This way, the plate package 14 can be inserted into the reactor 10 - or removed therefrom, as will be described in connection with Fig. 2 further below.

The reactor shell 12 is mounted on a socket element 28 that stands on ground and comprises a cylindrical body with an opening at an upper end. The bottom end 18 of the reactor extends into the socket element 28, without reaching the ground. At the point of contact between the reactor shell 12 and the socket element 28, the cross-sectional shapes of the two align, thereby providing a seamless connection (also see Figs. 2 and 3). The socket element 28 also comprises a lateral opening 30 that provides access to the bottom end 18 of the reactor (also see Fig. 3).

The reactor 10 comprises several inlets and outlets, namely a feed gas inlet 32 connected to a feed gas supply (not shown), a product gas outlet 34, a water inlet 36 in the area of the bottom end 18 of the reactor and a water/steam outlet 38 in the area of the top end 16 of the reactor (usually, cooling water exits the reactor as a mixture of hot water and steam, thus a water/steam outlet also functions as water outlet). In one embodiment, the feed gas contains hydrogen and carbon dioxide in stoichiometric ratios suitable for methane production. The feed gas flows through the plate package 14 within the reactor 10 (see Fig. 2), is methanized there, and leaves the reactor 10 as a resulting product gas through the product gas outlet 34 located in the lower shell section 24, (in the shown embodiment in the lower half of the reactor shell 12) .

Fig. 2 shows a longitudinal section through the reactor 10. As mentioned above, the reactor 10 comprises a plate package 14 that is positioned inside the reactor shell 12 and extends in the axial direction A. The plate package 14 comprises numerous cooling plates 40 with a catalyst filled in between to thereby form a fixed bed. The cooling plates 40 inside the plate package 14 are dimpled plates, which ensures even distribution of reactants across the bed's cross-section. The construction of plate packages forming a fixed bed are known *per se.* In the shown embodiment, the cooling plates 40 are held together by a frame 41 and thus form a single unit. A water inlet 42 and a product gas outlet 44 are arranged at a lower end 46 of the plate package, and a water/steam outlet 50 and a feed gas inlet 52 at an upper end 48. At its lower end 46, the plate package 14 is limited by a sieve or grid (not visible in Fig. 2). The grid has a mesh aperture which is less than the particle size of the catalyst material, such that the latter can be deposited between the cooling plates onto the grid.

As can be seen in Figs. 2 and 3, there are multiple water hoses connected to the upper and lower end 46, 48 of the plate package, respectively. Specifically, a number of flexible water hoses provide an upper connecting line 54 between the water/steam outlet 50 of the plate package and the water/steam outlet 38 of the reactor, and a lower connecting line 56 between the water inlet 36 of the reactor and the water inlet 42 of the plate package. The connection between the water hoses and the respective water inlet 36 or water/steam outlet 38 of the reactor is secured by internal flanges 57. Thereby, the thermal expansion of the plate package 14 can be compensated during operation of the reactor 10. Through the lower connecting line 56, a cooling fluid, which is in the present embodiment water, is introduced into the plate package 14 in order to remove the reaction heat produced during the reaction taking place. After the water has received the produced heat within the plate package 14, it can then stream out of the plate package 14 through the water/steam outlet 50 and through the upper connecting line 54 out of the water/steam outlet 38 of the reactor. The path of the water thus follows its natural draft, since the water introduced through the water inlet 36/42 has a higher density than the water-steam mixture exiting through the water/steam outlet 38/50. Thus, cooling fluid with the lower density ascends, i.e. flows against the direction of gravity, and cooling fluid of higher density introduced into the reactor naturally follows to replace it. Introducing the cooling fluid at the bottom end 18 of the reactor / at the lower end 46 of the plate package, natural convection process helps in distributing heat throughout the reactor and facilitates the cooling process. In addition, since the feed gas is introduced into the plate package 14 at the upper end 48 and exits the plate package 14 at the lower end 46, the cooling fluid and the feed gas can be directed in a counter-current manner.

Periodic regeneration or replacement of catalyst within the plate package is essential to maintain the efficiency and effectiveness of fixed-bed reactors in industrial processes. To facilitate such catalyst handling, the plate package is removably mounted within the reactor: The plate package 14 includes a foot element 58 at the lower end 46 and via said foot element, the plate package 14 is mounted, without welding, on a mounting 60 connected the reactor shell 12, whereby the lower end 46 of the plate package rests on the mounting 60 via the foot element 58. Only the mounting 60 is welded to the reactor shell 12 and provides a circumferential shoulder on which the plate package 14 can rest with its foot element 58. No additional fastening means are present to secure the foot element 58 on the mounting 60. Apart from the hoses for water/steam transfer, the plate package 14 is only indirectly in contact with the reactor shell 12 via the mounting 60. This design allows for thermal expansion of the plates 40 and also avoids thermal stress even if there is a considerable temperature difference between the reactor shell 12 and the plate package 14. In addition, it allows easy removal of the plate package 14 from the reactor 10 for maintenance and catalyst filling or exchange.

The plate package 14 is usually lifted into the reactor 10, specifically the lower shell section 24, with the aid of a crane (not shown) that lowers the plate packaging 14 down into the lower shell section 24 until it stably rests with its foot element 58 on the mounting 60. Subsequently, the upper shell section 22 is lowered from above with the aid of a crane until the flange faces of the flange units 26, 27 come together. To facilitate centering the upper shell section 22 and to avoid damaging the plate package 14 during assembly of the reactor 10, the plate package 14 comprises four spacer elements 62 extending essentially at a right angle from the outer surface at the upper end 48 of the plate package. In the installed state, these spacer elements 62 do not come into contact with the reactor shell 12.

The reactor further comprises a sealing plate 64 that is welded to the outer circumference of the plate package 14 and extends essentially vertically therefrom in the radial direction towards the reactor shell 12. At its radially outer (free) end 65, the sealing plate 64 is held between the flange faces of the two flange units 26, 27. The flange units 26, 27 with the sealing plate 64 in between are clamped against one another by means of flange screw connections 66. The sealing plate 64 thereby provides a gas-tight separation of an upper inlet gas plenum 68 facing top end 16 of the reactor from a lower outlet gas plenum 70 facing the bottom end 18 of the reactor. As it is held between the two flange units 26, 27, the sealing plate 64 can radially expand without compromising the gas-tight separation of the two gas plena 68, 70. The sealing plate 64 also comprises a thermal expansion loop 72 for thermal compensation. The cross-section of the thermal expansion loop 72 is that of an U. The thermal expansion loop 72 accommodates the thermal expansion and contraction of the sealing plate 64 due to changes in temperature. When the plate package 14 is removed from the reactor shell 12, e.g. for catalyst exchange, it is removed together with the sealing plate 64.

A feed gas space 74 is provided between an outer wall of the plate package 14 and an inner wall of the reactor shell 12, said feed gas space 74 being delimited in the downward direction by the sealing plate 64. Since the plate package 14 is located to a greater extent in the upper half of the reactor shell 12 and the sealing plate 64 is located in the lower half of the reactor shell 12 (not including the socket element), the feed gas space 74 extends along at least half of the length of the plate package 14.

The feed gas enters the reactor 10 through the feed gas inlet 32, flows upwardly through the feed gas space 74 and becomes heated thereby. The heated feed gas then enters the plate package 14 through the feed gas inlet 52 at the upper end 48 of the plate package and flows downwardly, i.e. in the direction of gravity, through the interior of the catalyst bed. The reacted gases exit through the product gas outlet 44 from the plate package 14 and then exit the reactor 10 through the reactor product gas outlet 34.

In the shown embodiment, the reactor 10, including the socket element 28, has an overall height of about seven meters and is about two meters wide. The flange connection 25 is in a central region of the reactor 10 (including the socket element). The feed gas inlet 32 of the reactor is located above, i.e. closer to the top end 16 of the reactor than, the flange connection 25. On the other hand, the product gas outlet 34 of the reactor is located below, i.e. closer to the bottom end 18 of the reactor than, the flange connection 25. This enables the gas flow route described above.

As used herein, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% of the particular term.

## Claims

1. Fixed-bed reactor (10) including
a reactor shell (12) extending in an axial direction (A) from a top end (16) of the reactor towards a bottom end (18) of the reactor,
a feed gas inlet (32) connected to a feed gas supply,
a product gas outlet (34),
a water inlet (36) in the area of the bottom end (18) of the reactor and a water/steam outlet (38) in the area of the top end (16) of the reactor,
a plate package (14) positioned inside the reactor shell (12) and extending in the axial direction (A), the plate package comprising at least two plates (40) with a catalyst filled in between to thereby form a fixed bed, and further comprising a water inlet (42) and a product gas outlet (44) at a lower end (46), and a water/steam outlet (50) and a feed gas inlet (52) at an upper end (48) ;
wherein the plate package (14) is mounted on a mounting (60) connected the reactor shell (12), whereby the lower end (46) of the plate package rests on the mounting (60);
the reactor shell (12) having an upper shell section (22) and a lower shell section (24), each shell section (22, 24) including a convexly shaped endplate (20, 21) at one end and a flange unit (26, 27) with a flange face at another end, the two shell sections (22, 24) being sealingly connected by clamping the two flange faces of the flange units (26, 27) against one another,
wherein the reactor further comprises a sealing plate (64) extending essentially perpendicularly to the axial direction (A) and being held between the flange faces of the two flange units (26, 27), the sealing plate (64) providing a gas-tight separation of an upper inlet gas plenum (68) facing top end (16) of the reactor from a lower outlet gas plenum (70) facing the bottom end (18) of the reactor.

2. Reactor according to Claim 1, wherein the sealing plate (64) is attached, preferably welded, to the outer circumference of the plate package (14) and extends therefrom in the radial direction.

3. Reactor according to Claim 1 or 2, wherein the sealing plate (64) comprises a thermal expansion loop (72) for thermal compensation.

4. Reactor according to one of Claims 1 to 3, wherein the two flange units (26, 27) are detachably attached to one another, allowing opening of the reactor shell (12).

5. Reactor according to any of Claims 1 to 4, wherein each of the upper and lower shell section (22, 24) is integrally formed, preferably in one piece, with its pertaining endplate (20, 21) and its pertaining flange unit (26, 27).

6. Reactor according to any of Claims 1 to 5, wherein the plate package (14) is mounted on the mounting (60) in a non-welded manner and is removable from the reactor shell (12), preferably together with the sealing plate (64).

7. Reactor according to one of Claims 1 to 6, wherein the plate package (14) is only indirectly in contact with the reactor shell (12) via the mounting (60).

8. Reactor according to one of Claims 1 to 7, wherein the plate package (14) comprises a foot element (58) at the lower end (46), said foot element (58) resting on the mounting (60).

9. Reactor according to one of Claims 1 to 8, wherein a lower connecting line (56) between the water inlet (36) of the reactor and the water inlet (42) of the plate package and/or an upper connecting line (54) between the water/steam outlet (50) of the plate package and the water/steam outlet (38) of the reactor includes multiple flexible water hoses, said water hoses being preferably made of stainless steel.

10. Reactor according to Claim 9, wherein the water hoses of the upper connecting line (54) and/or the water hoses of the lower connecting line (56) are connected to the respective water/steam outlet (38) or water inlet (36) of the reactor via one or more internal flanges (57).

11. Reactor according to one of Claims 1 to 10, wherein the sealing plate (64) and the feed gas inlet (32) of the reactor are located in the lower half of the reactor shell (12) .

12. Reactor according to one of Claims 1 to 11, wherein a feed gas space (74) is provided between an outer wall of the plate package (14) and an inner wall of the reactor shell (12), said feed gas space (74) being delimited in the downward direction by the sealing plate (64) and extending along at least half of the length of the plate package (14) .

13. Reactor according to one of Claims 1 to 12, wherein the product gas outlet (34) of the reactor is located in the lower half of the reactor shell (12), preferably in the area of the interface of lower shell section (24) and its pertaining endplate (21).

14. Reactor according to one of Claims 1 to 13, wherein, as seen in the axial direction (A), the feed gas inlet (32) of the reactor is located above the sealing plate (64) and wherein the product gas outlet (34) of the reactor is located below the sealing plate (64).

15. Reactor according to one of Claims 1 to 14, wherein the reactor shell (12) is mounted on a cylindrical socket element (28), the bottom end (18) of the reactor extending into the socket element (28), wherein, at the point of contact, the cross-sectional shape of the reactor shell (12) aligns with the cross-sectional shape of the socket element (28).
